Europäisches Patentamt

European Patent Office

Office européen des brevets

(19)

(11) Veröffentlichungsnummer: **0 298 521
B1**

# (12) EUROPÄISCHE PATENTSCHRIFT

(45) Veröffentlichungstag der Patentschrift:
**12.09.90**

(21) Anmeldenummer: **88111038.1**

(22) Anmeldetag: **11.07.88**

(51) Int. Cl.⁵: **F16F 1/36, B29C 53/12**

(54) **Feder mit spiralförmigen Federarmen.**

(30) Priorität: **10.07.87  DE 3722893**

(43) Veröffentlichungstag der Anmeldung:
**11.01.89 Patentblatt 89/2**

(45) Bekanntmachung des Hinweises auf die Patenterteilung:
**12.09.90 Patentblatt 90/37**

(84) Benannte Vertragsstaaten:
**FR**

(56) Entgegenhaltungen:
**EP-A- 0 082 321
EP-A- 0 171 706
DE-C- 893 296
FR-A- 1 550 579**

(73) Patentinhaber: **Messerschmitt-Bölkow-Blohm
Gesellschaft mit beschränkter Haftung,
Robert-Koch-Strasse, D-8012 Ottobrunn(DE)**

(72) Erfinder: **Hahn, Michael, Bahnofstrasse 15b,
D-8012 Ottobrunn(DE)**
Erfinder: **Maier, Georg, Zeno-Pfest-Strasse 6,
D-8254 Isen(DE)**

## Beschreibung

Die Erfindung betrifft eine Feder gemäß dem Oberbegriff des Patentanspruchs 1.

Einer derartigen zumeist in feinmechanischen Werken beispielsweise von Meß- und Regel- oder Steuersystemen verwendeten Feder, gemäß der DE-C 893 296 ein Stanzteil aus Blech in einem Ventil, ist bisher ein Aufbau aus Faserverbundkunststoff verwehrt, u.a. weil für die dann einzeln zu fertigenden Federbauelemente eine entsprechend feine (raumsparende) und dennoch sichere Verbindungstechnik fehlt.

Der Erfindung liegt daher die Aufgabe zugrunde, eine Feder der eingangs genannten Art für einen mit einfachen Mitteln zu bewerkstelligenden Einsatz von faserverstärktem Kunststoff auszubilden.

Diese Aufgabe ist gemäß dem Kennzeichen des Patentanspruchs 1 gelöst. Die Erfindung ermöglicht demnach den Faserstoffaufbau einer Federringscheibe unter gänzlicher Vermeidung von festigkeitsmindernden Unterteilungen im Wege der Beschränkung auf die Verbindungssicherheit Stoffschluß. Dies wird durch die in den Unteransprüchen gekennzeichneten Ausgestaltungen der Erfindung weiter verdeutlicht, welche zudem die Nutzungsmöglichkeit von bewährten einfachen FVK-Fertigungstechniken sicherstellen.

Nachfolgend wird ein Ausführungsbeispiel der Erfindung anhand der Zeichnung erläutert. Diese zeigt in

Fig. 1 in der Draufsicht eine Feder in Form einer Federringscheibe,

Fig. 2 einen vergrößerten Schnitt nach Schnittlinie II–II der Fig. 1,

Fig. 3 die Kernlage gemäß Fig. 2 in der Draufsicht gemäß Fig. 1,

Fig. 4 bis 7 je ein Einzelteil der Kernlage gemäß Fig. 3.

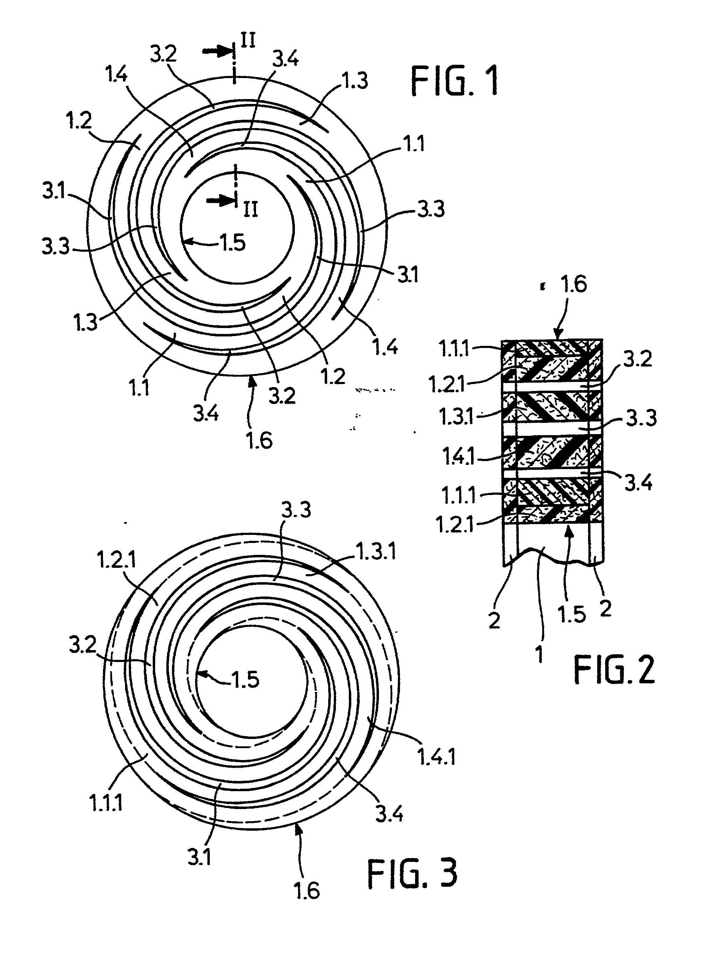

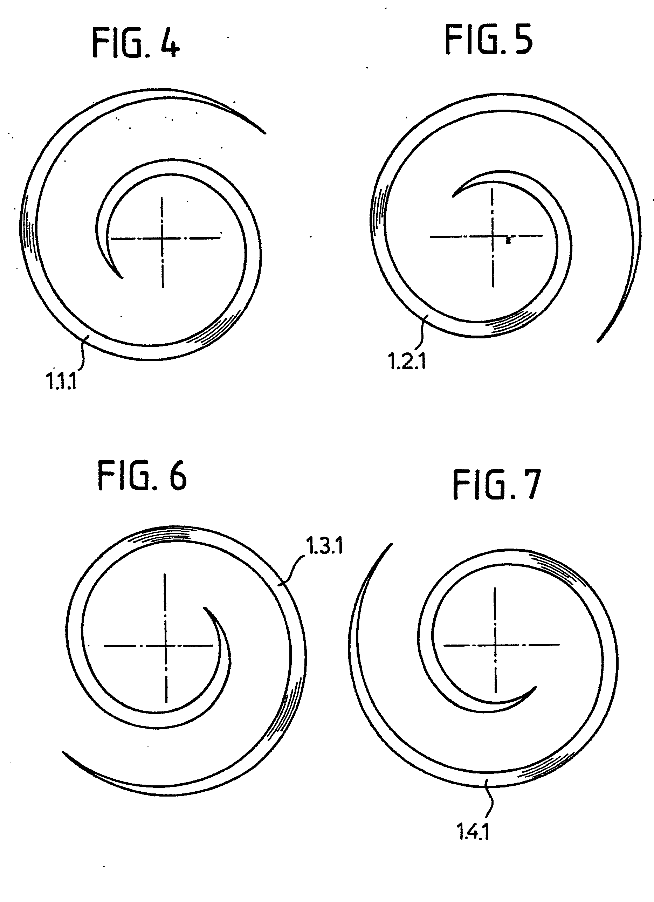

Die Federringscheibe gemäß Fig. 1, z.B. zur Lagerung eines schwingungsfähigen Bauteils, ist gemäß Fig. 2 ein mehrlagiger Körper aus Faserverbundkunststoff, wie Glasfasern in einer Harz- o. dgl. Bindungsmasse. Der Lagenaufbau weist mindestens eine Kernlage 1 gemäß Fig. 3 mit zwei Decklagen 2 auf; bei größerer Lagenanzahl folgt von innen nach außen grundsätzlich jeweils auf eine Lage mit Kernlagenstruktur eine Lage mit Decklagenstruktur. Während für die einzelne Decklage 2 eine kreuzweise Faserorientierung in der Ringscheibenebene vorgesehen ist und sie folglich ein nach der in Fig. 1 dargestellten Federgestalt aus einem Gewebelaminat o. dgl. gestanztes Bauteil sein kann, ist die Kernlage 1 gemäß Fig. 3, als der eigentliche (im wesentlichen die Federwirkung erbringende) Federkörper, eine aus den in Fig. 4 bis 7 dargestellten spiralförmigen Einzelteilen 1.1.1 bis 1.4.1 jeweils gleicher Größe zusammengesetzte Baueinheit. Dabei weisen diese z.B. in einfacher Faserlegetechnik vorgeformten Einzelteile 1.1.1 bis 1.4.1 eine unidirektionale Faserorientierung in Erstreckungsrichtung auf. Um hieraus die in Fig. 1 und 3 dargestellte Federgestalt bilden zu können, sind gemäß Fig. 3 die Unidirektionalfaserstoff-Einzelteile 1.1.1 bis 1.4.1 in der in Fig. 4 bis 7 dargestellten Lage so zusammengesetzt, daß aus der stoffschlüssigen Vereinigung ihrer Innenenden ein hohlzylindrischer, steifer Federkern 1.5 und aus der stoffschlüssigen Vereinigung ihrer Außenenden ein steifer Federrahmen 1.6 resultiert. Dazwischen verbleiben spiralförmige, gleich lange Federarme 1.1 bis 1.4 (Fig. 1) infolge spiralförmiger Spalte 3.1 bis 3.4, welche jeweils von ihrem Zentrum aus zum Federkern 1.5 und Federrahmen 1.6 hin abnehmen, und deren Spaltenden kern- bzw. rahmenseitig über den (Feder-)Ringscheibenumfang gleichmäßig, im Beispielsfall um 90° versetzt angeordnet sind. Die dargestellte Form der Spalte 3.1 bis 3.4 ergibt sich zwangsläufig beim Verbund der Unidirektionalfaserstoff-Einzelteile 1.1.1 bis 1.4.1 infolge einer überlappten Fügung ihrer Enden durch eine (in Fig. 3 durch Strichlinien angedeutete) Schäftung bis zum jeweils freigegebenen Spalt 3.1, 3.2, 3.3 bzw. 3.4.

Für diesen Aufbau der Kernlage 1 erfüllen die Decklagen 2 (Fig. 2) im wesentlichen eine stützende und den Verbund der Einzelteile 1.1 bis 1.4 sichernde Funktion, sind also hinsichtlich einer Federwirkung nahezu vernachlässigbar. Da der Faserstoffverbund der Federringscheibe gemäß der Erfindung allein durch Stoffschluß gesichert wird bzw. ohne gesonderte Verbindungsmittel zur Bewirkung von Kraft- und/oder Formschluß auskommt, erfüllt die Federringscheibe in hohem Maße die Forderung nach einer kompakten Bauform bzw. geringem Raumbedarf und ist dabei durch die Möglichkeit der Bestimmung der Federeigenschaften je nach Wahl von Breite, Dicke und Radius der Einzelteile 1.1.1 bis 1.4.1 einem breiten Anwendungsspektrum zugänglich.

## Patentansprüche

1. Feder mit zwischen einem kreisförmigen Federkern (1.5) und einem kreisförmigen Federrahmen (1.6) spiralförmig sich gleich lang erstreckenden, gleichmäßig versetzt angeordneten Federarmen (1.1, 1.2, 1.3, 1.4), wobei die gleich langen Spalte (3.1, 3.2, 3.3, 3.4) zwischen den Federarmen (1.1, 1.2, 1.3, 1.4) von ihrem Zentrum zu beiden Enden hin abnehmen, dadurch gekennzeichnet, daß die Feder aus faserverstärktem Kunststoff besteht, wobei jeder einzelne Federarm (1.1, 1.2, 1.3, 1.4) Fasern unidirektionaler Orientierung in Erstreckungsrichtung des jeweiligen Federarmes aufweist, daß der Federkern (1.5) und der Federrahmen (1.6) durch stoffschlüssige Vereinigung der jeweiligen Enden der Federarme (1.1, 1.2, 1.3, 1.4) gebildet sind, wobei die jeweils vereinigten Federarmenden durch eine Schäftung bis zum freigegebenen Spalt (3.1, 3.2, 3.3 bzw. 3.4) einander überlappend zusammengefügt sind.

2. Feder nach Anspruch 1, gekennzeichnet durch wenigstens zwei in der Federebene angeordnete Lagen (2), jeweils von Fasern in kreuzweiser Orientierung, zwischen welchen Lagen (2) die unidirektionalen Fasern zwischengefügt sind.

## Claims

1. Spring with spring arms (1.1, 1.3, 1.3, 1.4) extending in spiral fashion at even lengths between a circular spring core (1.5) and a circular spring frame (1.6) and arranged to be evenly offset whereby the gaps (3.1, 3.2, 3.3, 3.4) of equal lengths between the spring arms (1.1, 1.2, 1.3, 1.4) reduce from their centre towards the two ends, characterised in that the spring is made of fibre-reinforced plastics material whereby each individual spring arm (1.1, 1.3, 1.3, 1.4) has fibres of uni-directional orientation in the direction of extension of the respective spring arm, that the spring core (1.5) and the spring frame (1.6) are formed by joining of material of the respective ends of the spring arms (1.1, 1.2, 1.3, 1.4) whereby the respective combined spring-arm ends are joined by overlapping each other up to the released gap (3.1, 3.2, 3.3 or 3.4 respectively).

2. Spring according to claim 1, characterised by at least two layers (2) arranged in the spring plane (2), each of fibres in crosswise orientation, between which layers (2) the uni-directional fibres are placed.

## Revendications

1. Ressort comprenant des branches (1.1, 1.2, 1.3, 1.4) régulièrement décalées, s'étendant en forme de spirales sur une même longueur entre un noyau circulaire (1.5) et un cadre circulaire (1.6), les fentes de même longueur (3.1, 3.2, 3.3, 3.4) entre les branches (1.1, 1.2, 1.3, 1.4) allant en diminuant depuis leur centre jusqu'à leurs deux extrémités, caractérisé par le fait que le ressort est en matière synthétique renforcée de fibres, chaque branche individuelle (1.1, 1.2, 1.3, 1.4) comportant des fibres d'orientation unidirectionnelle dans le sens de l'étendue de chaque branche du ressort, que le noyau (1.5) et le cadre (1.6) du ressort sont formés par un assemblage par matière des extrémités respectives des branches (1.1, 1.2, 1.3, 1.4), les extrémités respectivement assemblées étant réunies en se chevauchant mutuellement par un biseau s'étendant jusqu'à la fente dégagée (3.1, 3.2, 3.3 et 3.4).

2. Ressort selon la revendication 1, caractérisé par au moins deux couches (2) disposées dans le plan du ressort et respectivement constituées de fibres d'orientation croisées, les fibres unidirectionnelles étant insérées entre ces couches (2).

FIG. 1

FIG.2

FIG. 3

# FIG. 4

1.1.1

# FIG. 5

1.2.1

# FIG. 6

1.3.1

# FIG. 7

1.4.1